# EUROPÄISCHE PATENTSCHRIFT

(11) **EP 1 880 126 B1**
(45) Veröffentlichungstag und Bekanntmachung des Hinweises auf die Patenterteilung: **24.12.2008**
(21) Anmeldenummer: 06828783.8
(22) Anmeldetag: 18.04.2006
(51) Int. Cl.: F16H 57/02, F16H 37/02

(54) **MEHRGRUPPENGETRIEBE**
MULTI-GROUP TRANSMISSION
BOITE DE VITESSES A PLUSIEURS GROUPES

(30) Priorität: 11.05.2005 DE 102005021761
(43) Veröffentlichungstag der Anmeldung: 23.01.2008
(73) Patentinhaber: ZF Friedrichshafen AG, 88038 Friedrichshafen (DE)
(72) Erfinder: RENNER, Stefan, 78351 Bodman-Ludwigshafen (DE); BADER, Josef, 88045 Friedrichshafen (DE); KELLER, Reiner, 78351 Ludwigshafen-Bodman (DE)
(86) Internationale Anmeldenummer: PCT/EP2006/003509
(87) Internationale Veröffentlichungsnummer: WO 2007/031119

(56) Entgegenhaltungen:
- EP-A- 0 541 035
- WO-A-20/05037590
- DE-A1- 10 143 325

## Beschreibung

Die vorliegende Erfindung betrifft ein Mehrgruppengetriebe gemäß dem Oberbegriff des Patentanspruchs 1.

Getriebe für Nutzkraftfahrzeuge weisen häufig zwölf, sechzehn oder mehr Gänge auf. Derartige Vielganggetriebe sind meist als Mehrgruppengetriebe ausgestaltet, die sich in eine Vorschaltgruppe, eine Hauptgruppe bzw. ein Hauptgetriebe und eine Bereichsgruppe aufteilen. Um den durch die Vielzahl der Gänge entstehenden komplexen Schaltablauf zu erleichtern, weisen die meisten dieser Getriebe eine mittels eines Getriebestellers automatisierte Schalteinrichtung auf. Dabei können die Schaltungen in der Vorschaltgruppe und in der Bereichsgruppe pneumatisch erfolgen, während die Schaltungen im Hauptgetriebe manuell vom Fahrzeugführer durchgeführt werden oder mittels geeigneter elektrohydraulischer, elektropneumatischer und elektromotorischer Stelleinrichtungen oder einer Kombination aus diesen Aktuatoren automatisiert ablaufen.

Derartige Fahrzeuggetriebe weisen mehrere Komponenten auf, die unterschiedlichen Funktionalitäten entsprechen, die oft in das Gehäuse des Getriebes integriert sind. Derartige Komponenten können beispielsweise Aktuatoren bzw. Getriebesteller oder Sensoren sein.

Hierbei entsteht die Notwendigkeit einer einfachen und kostengünstigen Montage dieser Komponenten sowie der Austauschbarkeit einzelner Komponenten. Des weiteren sollen überflüssige Schnittstellen vermieden werden.

Aus der gattungsgemäßen WO 2005/037590 A der Anmelderin ist ein Fahrzeuggetriebe bekannt, mit einem Gehäuse, in oder an dem drehmomentübertragende Bauteile vorgesehen sind, die eine zwischen dem Fahrzeuggetriebe und einem das Getriebe antreibenden Rotor angeordnete Kupptungseinrichtung umfassen. Des weiteren sind im oder am Gehäuse Betätigungselemente zur Betätigung der drehmomentübertragenden Bauteile angeordnet, wobei das Gehäuse einen sich in Richtung der Kupplungseinrichtung erstreckenden Bereich umfasst, in dem eine mit dem Gehäuse fest verbindbare Anschlussplatte vorgesehen ist, in der Aufnahmen für zumindest Teile der Betätigungselemente zur Betätigung der drehmomentübertragenden Bauteile vorgesehen sind. Die Betätigungselemente sind vorzugsweise Teile einer Schaltung eines Hauptgetriebes und/oder eines Splitgruppengetriebes und/oder eines Bereichsgruppengetriebes des Fahrzeuggetriebes.

Ferner ist aus der DE 100 05 086 A1 der Anmelderin ein Getriebe mit zentraler Kupplungsausrückung bekannt, wobei die Vorrichtung zur Kupplungsausrückung zwischen der Kupplungsscheibe und der Kupplungsglocke des Getriebes vorgesehen ist. Hierbei ist die im oder am Getriebe vorgesehene Getriebesteuerung mit der Vorrichtung zur Kupplungsausrückung elektrisch unmittelbar verbunden; das Medium zur Betätigung der Kupplung ist zudem unmittelbar aus der Getriebesteuerung entnommen.

Ferner ist aus der DE 199 15 471 A1 der Anmelderin eine Vorrichtung zur Messung der Getriebeöltemperatur bekannt, welche einen Temperatursensor umfasst, der außerhalb des Ölsumpfes im Getriebegehäuse angeordnet und vorzugsweise direkt in den Getriebesteller integriert ist.

Bei den aus dem Stand der Technik bekannten Konstruktionen, bei denen am Getriebegehäuse ein separates Bauteil vorgesehen ist, welches die Arbeitszylinder der Betätigungseinrichtungen und entsprechende integrierte Wegsensoren enthält, sind als weitere Bauteile die Kanalplatte, die Ventilplatte, Magnetventile, ein Drehzahlsensor und eine Steuereinheit vorgesehen. Diese Bauteile werden im Deckel des Getriebestellers befestigt, der in einer großen Tasche im Getriebegehäuse montiert wird. In nachteiliger Weise ist hierbei eine spezielle Koppelung zu den Schaltstangen erforderlich. Des weiteren sind die Automatisierungsbauteile des Kupplungsstellers, nämlich die Magnetventile und der Sensor im Kupplungssteller integriert, was in der Notwendigkeit eines außenliegenden Kabelbaums zur Steuereinheit (ECU) und eines separaten Luftanschlusses resultiert.

Der vorliegenden Erfindung liegt die Aufgabe zugrunde, ein als Mehrgruppengetriebe ausgebildetes Fahrzeuggetriebe, umfassend einen Getriebesteller anzugeben, bei dem die genannten Nachteile des Standes der Technik vermieden werden.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein Mehrgruppengetriebe, umfassend einen Getriebesteller vorgeschlagen, bei dem die Arbeitszylinder der Betätigungseinrichtungen des Getriebestellers und die notwendigen Luftkanäle im Getriebegehäuse integriert sind. In vorteilhafter Weise wird erfindungsgemäß vorgeschlagen, dass der Kupplungssteller ebenfalls im Getriebegehäuse integriert ist.

Des weiteren wird im Rahmen der Erfindung vorgeschlagen, den Getriebesteller modular aufzubauen, wobei folgende Module definiert werden, die jeweils einer Montageebene entsprechen:
- Sensor-Modul
- Modul, umfassend die Aufbau- und Verbindungstechnik und die Steuereinheit,
- Magnetventile-Modul und
- Wähl-Modul, enthaltend den Magneten.

Gemäß einer vorteilhaften Weiterbildung der Erfindung ist die Getriebetasche für die elektrischen Bauteile durch einen Deckel von außen zugänglich und vom Ölraum getrennt. Sie wird außerdem in vorteilhafter Weise als Sammelraum für die Abluft genutzt.

Durch die erfindungsgemäße Konzeption können bekannte serienreife und auch zuverlässige Bauteile im Getriebe integriert werden, was in weniger Schnittstellen und folglich in einer signifikanten Kosteneinsparung resultiert. Es wird nur eine elektrische und eine pneumatische Schnittstelle zum Getriebe benötigt.

Des weiteren wird kein separater außenliegender Kabelbaum am Getriebe benötigt, da die Magnetventile und der Sensor des Kupplungsstellers in das Magnetventil-Modul bzw. in das Sensor-Modul integriert sind.

Ein weiterer Vorteil der erfindungsgemäßen Konstruktion besteht darin, dass einzelne Module am eingebauten Getriebe von außen getauscht werden können; auch können einzelne Module separat vorgeprüft werden.

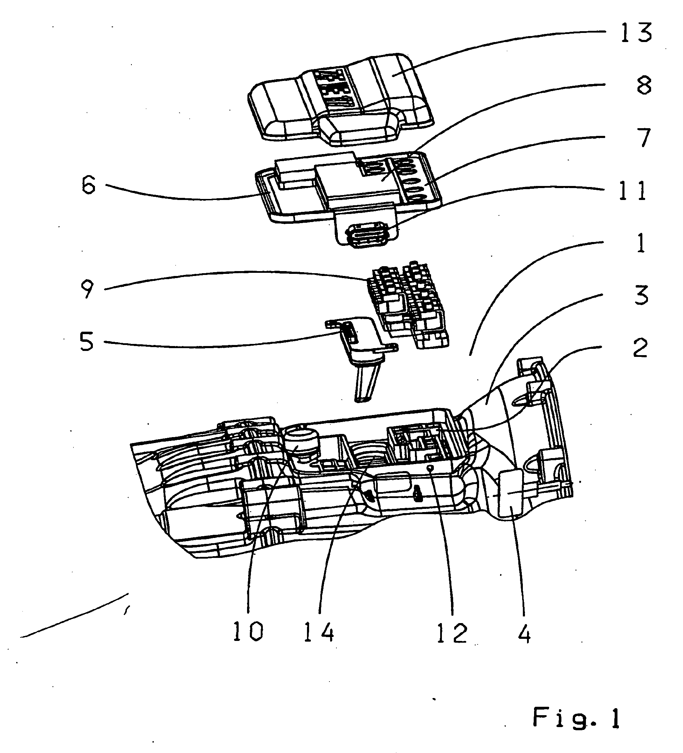

Die Erfindung wird im Folgenden anhand der beigefügten Fig. 1, welche eine perspektivische Explosionsdarstellung eines Teils eines erfindungsgemäßen Mehrgruppengetriebes darstellt, beispielhaft näher erläutert.

In der Fig. 1 ist ein Teil des Getriebes 1 gezeigt. Gemäß der Erfindung sind die Arbeitszylinder der Betätigungseinrichtungen des Getriebes 1, die notwendigen Luftkanäle 2 und der Kupplungssteller 4 im Getriebegehäuse 3 integriert. Der Kupplungssteller 4 ist zentral um die Antriebswelle angeordnet.

Wie aus der Fig. 1 ersichtlich, ist der Getriebesteller modular aufgebaut; als Module sind das Sensor-Modul 5, das Modul 6, welches die Aufbau- und Verbindungstechnik 7 und die Steuereinheit (ECU) 8 umfasst, das Magnetventil-Modul 9 und das Wähl-Modul 10 vorgesehen. In der Fg. 1 ist der zentrale Stecker, der im Modul 6 vorgesehen ist, mit 11 und der zentrale Pneumatikanschluss mit 12 bezeichnet.

Die Module 5, 6, 9 und 10 sind in einer Getriebetasche 14 angeordnet, welche durch einen Deckel 13 verschließbar ist. Durch den Deckel 13 sind die elektrischen Bauteile von außen zugänglich, was einen einfachen Austausch einzelner Komponenten ermöglicht.

### Bezugszeichen

- 1: Getriebe
- 2: Luftkanal
- 3: Getriebegehäuse
- 4: Kupplungssteller
- 5: Sensor-Modul
- 6: Modul, enthaltend die Aufbau- und Verbindungstechnik und die Steuereinheit
- 7: Aufbau- und Verbindungstechnik
- 8: Steuereinheit (ECU)
- 9: Magnetventil-Modul
- 10: Wähl-Modul
- 11: zentraler Stecker
- 12: zentraler Pneumatikanschluss
- 13: Deckel
- 14: Getriebetasche

## Patentansprüche

1. Mehrgruppengetriebe umfassend
ein Getriebegehäuse (3),
einen Getriebesteller, der Betätigungseinrichtungen mit zugeordneten Arbeitszylindern aufweist,
einen Kupplungssteller (4), und
notwendige Luftkanäle,
**dadurch gekennzeichnet, dass**
die Arbeitszylinder der Betätigungseinrichtungen des Getriebestellers, die notwendigen Luftkanäle (2) und der Kupplungssteller (4) im Getriebegehäuse (3) integriert sind.

2. Mehrgruppengetriebe nach Anspruch 1, **dadurch gekennzeichnet, dass** der Getriebesteller modular aufgebaut ist, wobei als Module das Sensor-Modul (5), ein Modul (6), weiches die Aufbau- und Verbindungstechnik (7) und die Steuereinheit (ECU) (8) umfasst, das Magnetventil-Modul (9) und das Wähl-Modul (10) vorgesehen sind.

3. Mehrgruppengetriebe nach Anspruch 2, **dadurch gekennzeichnet, dass** die Module (5, 6, 9, 10) in einer Getriebetasche (14) angeordnet sind, welche durch einen Deckel (13) verschließbar ist.

4. Mehrgruppengetriebe nach Anspruch 3, **dadurch gekennzeichnet, dass** die Getriebetasche (14) als Sammelraum für die Abluft dient.

## Claims

1. Multiple range-change transmission comprising a transmission housing (3), a transmission actuator featuring controls with assigned working cylinders, a clutch actuator (4), and air ducts, **characterized in that** the working cylinders of the controls of the transmission actuator, the air ducts (2) and the clutch actuator (4) are integrated into the transmission housing (3).

2. Multiple range-change transmission according to claim 1, **characterized in that** the transmission actuator is modularly designed and made of a sensor module (5), a module (6) comprising the assembly and interconnection technology (7) and the control unit/ECU (8), a solenoid valve module (9), and a selector module (10).

3. Multiple range-change transmission according to claim 2, **characterized in that** the modules (5, 6, 9, 10) are arranged in a transmission pocket (14) which can be closed by a cover (13).

4. Multiple range-change transmission according to claim 3, **characterized in that** the transmission pocket (14) functions as a reservoir for the exhaust air.

## Revendications

1. Boîte de vitesses à plusieurs groupes comprenant un carter de boîte de vitesses (3), un actionneur de boîte de vitesses, celui-ci comprenant des dispositifs d'actionnement avec des cylindres de travail associés aux dispositifs d'actionnement, un actionneur d'embrayage (4), et des canaux d'air nécessaires, **caractérisée en ce que** les cylindres de travail des dispositifs d'actionnement de l'actionneur de la boîte de vitesses, les canaux d'air nécessaires (2) et l'actionneur d'embrayage (4) sont intégrés dans le carter de la boîte de vitesses (3).

2. Boîte de vitesses à plusieurs groupes selon la revendication 1, **caractérisée en ce que** l'actionneur de la boîte de vitesses à une structure modulaire, sachant qu'en tant que modules sont prévus le module capteur (5), un module (6) comprenant les éléments de montage et de liaison (7) et le boîtier de commande électronique (ECU) (8), le module d'électrovanne (9) et le module de sélection (10).

3. Boîte de vitesses à plusieurs groupes selon la revendication 2, **caractérisée en ce que** les modules (5, 6, 9, 10) sont disposés dans une poche de la boîte de vitesses (14), celle-ci pouvant être fermée par un couvercle (13).

4. Boîte de vitesses à plusieurs groupes selon la revendication 3, **caractérisée en ce que** la poche de la boîte de vitesses (14) sert également d'espace collecteur pour l'air évacué.
